Europäisches Patentamt

European Patent Office

Office européen des brevets

(11) Numéro de publication: **0 254 624**
**A1**

## (12) DEMANDE DE BREVET EUROPEEN

(21) Numéro de dépôt: 87401588.6

(51) Int. Cl.⁴: **B 60 R 16/02**

(22) Date de dépôt: 07.07.87

(30) Priorité: 11.07.86 FR 8610155

(43) Date de publication de la demande:
27.01.88 Bulletin 88/04

(84) Etats contractants désignés:
CH DE GB IT LI NL

(71) Demandeur: REGIE NATIONALE DES USINES RENAULT
Boîte postale 103 8-10 avenue Emile Zola
F-92109 Boulogne-Billancourt (FR)

(72) Inventeur: Korb, Jean-Pierre
25, rue du Docteur Zamenhof
F-92500 Rueil-Malmaison (FR)

(54) Procédé d'affichage de l'information de vidange d'huile dans un moteur à combustion interne.

(57) L'invention est relative à un procédé d'affichage de l'information de vidange d'huile moteur pour un moteur à combustion interne équipé d'un calculateur électronique d'injection relié à un ordinateur de bord comportant :
- le calcul d'un nombre (N) de kilomètres pondérés,
- la diminution de la durée (T) des impulsions d'une durée (d) à chaque (N) kilomètres jusqu'à un seuil (To) minimal correspondant à (M.N) kilomètres pondérés,
- la mémorisation des (M.N) kilomètres pondérés,
- leur soustraction aux kilomètres réels restant à parcourir,
- l'affichage des kilomètres réels restant à parcourir avant vidange.

EP 0 254 624 A1

FIG.2

Bundesdruckerei Berlin

## Description

## PROCEDE D'AFFICHAGE DE L'INFORMATION DE VIDANGE D'HUILE DANS UN MOTEUR A COMBUSTION INTERNE

Dans un véhicule automobile équipé d'un calculateur électronique d'injection et d'un ordinateur de bord doté de moyens d'affichage, il est intéressant de pouvoir afficher au conducteur aussi bien la consommation d'essence que le kilométrage restant à parcourir avant la vidange d'huile du moteur. Pour que cette information ne soit pas coûteuse, il faut éviter l'emploi de nouveaux moyens de calcul et de transmission de l'information.

Pour cela, l'invention propose d'utiliser le calculateur d'injection et l'ordinateur de bord déjà existant, pour le moteur, sans fil de liaison supplémentaire entre eux pour transmettre cette information de nécessité de vidange, par conséquent sans surcoût.

L'objet de l'invention concerne un procédé d'affichage de l'information de vidange d'huile moteur pour un moteur à combustion interne équipé d'un calculateur électronique d'injection relié par un fil de liaison à un ordinateur de bord doté d'un dispositif d'affichage, ledit calculateur délivrant à l'ordinateur de bord des impulsions I' de durée T correspondant à la consommation de carburant, caractérisé en ce qu'il comprend les étapes suivantes, tout d'abord par le calculateur électronique :

a)- calcul d'un nombre N déterminé de kilomètres pondérés correspondant aux kilomètres réels parcourus par le véhicule corrigés par un coefficient qui est fonction de certains paramètres de fonctionnement du moteur ;

b)- diminution de la durée initiale T des impulsions I' d'une durée d à chaque calcul de N kilomètres pondérés, jusqu'à un seuil minimal $T_o$ de durée des impulsions correspondant à M.N kilomètres pondérés ;

c)- réajustement de la durée des impulsions I' à sa valeur initiale T ; et ensuite par l'ordinateur de bord ;

d)- mémorisation des M.N kilomètres pondérés ;

e)- soustraction de ces M.N kilomètres pondérés aux kilomètres réels restant à parcourir avant vidange, mémorisés lors du précédent calcul ;

f)- affichage des kilomètres réels restant à parcourir avant vidange.

D'autres caractéristiques et avantages de l'invention apparaîtront à la lecture de la description des figures suivantes qui représentent :

- la figure 1 : les impulsions correspondant à la consommation d'essence calculée par le calculateur d'injection, transmises à l'ordinateur de bord selon l'art antérieur ;

- la figure 2 : ces mêmes impulsions transmises selon l'invention.

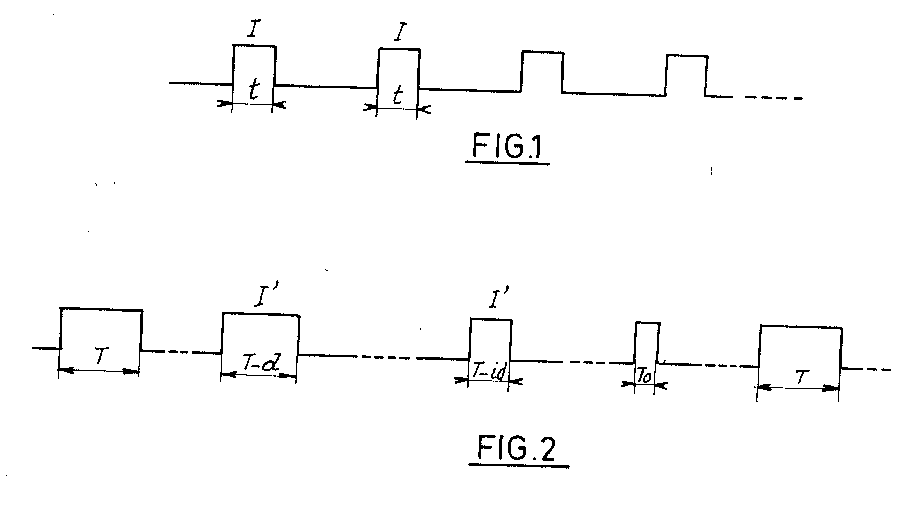

Actuellement, le calculateur électronique d'injection, qui équipe un moteur de véhicule automobile, calcule la consommation de carburant du véhicule en fonction d'un certain nombre de paramètres de fonctionnement du moteur. Ce calculateur émet un train d'impulsions I, de durée fixe t, sur un fil de liaison vers l'ordinateur de bord (figure 1). Chaque impulsion I correspond à une quantité Q déterminée d'essence injectée. L'ordinateur de bord soustrait ces quantités Q de carburant à la quantité restant dans le réservoir et son dispositif d'affichage informe le conducteur du véhicule de la consommation instantanée ou moyenne en carburant, du nombre de kilomètres restant à parcourir ou du nombre de litres restant dans le réservoir.

L'invention se propose d'utiliser ces mêmes moyens pour informer le conducteur de la nécessité d'une vidange d'huile. Pour cela, le calculateur électronique calcule des kilomètres pondérés, c'est-à-dire des kilomètres réels parcourus par le véhicule corrigés par un coefficient qui est fonction de certains paramètres de fonctionnement du moteur. Ces paramètres peuvent être par exemple la température d'huile, le régime du moteur, etc... Lorsque le calculateur électronique a déterminé un nombre N fixé de kilomètres pondérés, il retranche à la durée initiale T des impulsions I', correspondant à la quantité de carburant injectée, une durée d. Il effectue cette soustraction à chaque fois qu'il a calculé N kilomètres pondérés, pendant un nombre M de fois jusqu'à ce que la durée des impulsions I atteigne un seuil minimal déterminé $T_o = T - M.d$.

La figure 2 représente le train d'impulsion I' émis par le calculateur électronique et transmettant les informations à la fois de consommation de carburant et de nécessité de vidange d'huile moteur. Par rapport aux impulsions I émises par le calculateur pour la consommation de carburant seule, elles ont une durée initiale T supérieure à celle t de ces impulsions.

Avant que le calculateur électronique n'ait déterminé N kilomètres pondérés, les impulsions I' allant vers l'ordinateur de bord ont une durée initiale T. Lorsque N kilomètres pondérés ont été calculés, les impulsions I' ont une durée inférieure à T, égale à T - d. A chaque obtention de N kilomètres pondérés, la durée des impulsions I' diminue et est égale à T - i.d, i étant un nombre entier variant de O à M. Lorsque le calculateur a trouvé M.N kilomètres pondérés, la durée des impulsions I' égale à T -M.d = $T_o$, a atteint un seuil minimal $T_o$. Le calculateur réajuste ensuite la durée des impulsions I' à sa valeur initiale T.

A cet instant, l'ordinateur de bord mémorise les M.N kilomètres pondérés calculés puis les soustrait aux précédents kilomètres réels restant à parcourir mémorisés lors du calcul précédent. L'information sur le nombre de kilomètres réels restant à faire avant d'effectuer une vidange de l'huile moteur est alors affichée au tableau de bord du véhicule. Et le procédé va être réitéré comme précédemment.

A chaque vidange, l'ordinateur de bord est réinitialisé au nombre maximum de kilomètres prévu, 10.000 kilomètres par exemple, lors de l'envoi d'un code spécial, déterminé à l'avance, au moyen d'un outil de diagnostic. Ce code peut arriver directement à l'ordinateur de bord s'il existe un branchement direct entre ce dernier et l'outil de diagnostic. Ce code peut aussi transiter par le calculateur électronique d'injection qui l'envoie sur sa liaison avec l'ordinateur de·bord. Ce code se présente sous forme d'une série d'impulsions I″ déterminées à l'avance et différente du train d'impulsions I′ précédemment décrit. Ce code sera alors interprété par l'ordinateur de bord comme une réinitialisation du nombre maximum de kilomètres à parcourir avant une nouvelle vidange.

L'avantage ce cette invention réside dans le fait qu'un même fil de liaison entre le calculateur électronique et l'ordinateur de bord permet la transmission de deux informations distinctes qui sont la consommation de carburant d'une part et le nombre de kilomètres pondérés parcourus par le véhicule.

## Revendications

1. Procédé d'affichage de l'information de vidange d'huile moteur pour un moteur à combustion interne équipé d'un calculateur électronique d'injection relié par un fil de liaison à un ordinateur de bord doté d'un dispositif d'affichage, ledit calculateur délivrant à l'ordinateur de bord des impulsions (I′) de durée (T) correspondant à la consommation de carburant, caractérisé en ce qu'il comprend les étapes suivantes, tout d'abord par le calculateur électronique :

a)- calcul d'un nombre (N) déterminé de kilomètres pondérés correspondant aux kilomètres réels parcourus par le véhicule corrigés par un coefficient qui est fonction de certains paramètres de fonctionnement du moteur ;

b)- diminution de la durée initiale (T) des impulsions (I′) d'une durée (d) à chaque calcul de (N) kilomètres pondérés, jusqu'à un seuil minimal ($T_0$) de durée des impulsions correspondant à (M.N) kilomètres pondérés ;

c)- réajustement de la durée des impulsions (I′) à sa valeur initiale (T) ; et ensuite par l'ordinateur de bord ;

d)- mémorisation des (M.N) kilomètres pondérés ;

e)- soustraction de ces (M.N) kilomètres pondérés aux kilomètres réels restant à parcourir avant vidange, mémorisés lors du précédent calcul ;

f)- affichage des kilomètres réels restant à parcourir avant vidange.

2. Procédé selon revendication 1, caractérisé en ce que l'ordinateur de bord reçoit, directement par un outil de diagnostic ou par le calculateur électronique d'injection, un code spécial constitué par une série d'impulsions (I″) destiné à autoriser la réinitialisation du nombre maximum de kilomètres à parcourir avant une nouvelle vidange.

## FIG.1

## FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | US-A-4 344 136 (PANIK) <br> * Figure 1B * | 1 | B 60 R 16/02 |
| | --- | | |
| A | US-A-4 031 363 (FREEMAN) <br> * Résumé; figure 2 * | 1 | |
| | --- | | |
| A | US-A-4 483 301 (YAMADA) <br> * Résumé * | 1 | |
| | ----- | | |

DOMAINES TECHNIQUES RECHERCHES (Int. Cl.4)

B 60 R
B 60 S
F 02 D
G 07 C
B 60 Q

Le présent rapport de recherche a été établi pour toutes les revendications

| Lieu de la recherche | Date d'achèvement de la recherche | Examinateur |
|---|---|---|
| LA HAYE | 16-10-1987 | ONILLON C.G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82